# EUROPEAN PATENT APPLICATION

(11) **EP 2 963 886 A1**
(43) Date of publication of application: **06.01.2016**
(21) Application number: 14306072.1
(22) Date of filing: 02.07.2014
(51) Int. Cl.: H04L 29/06, H04L 29/08, H04L 12/24, H04W 12/08, H04Q 9/02, H04M 11/00, H04W 4/00, H04W 4/20, H04W 24/10

(54) **Method for execution of remote command in a wireless terminal**

(71) Applicant: Gemalto SA, 92190 Meudon (FR)
(72) Inventor: Jutard, Laurent, 13705 La Ciotat (FR)

(57) **Abstract**

The present invention relates to a method for execution of a remote command in a wireless terminal,
the wireless terminal and a server communicatively being coupled by a cellular wireless network,
the wireless terminal comprising a command interface configured to execute commands,
the method comprising the steps of
- receiving at the server a request first message from the wireless terminal,
- in response transmitting a second message on a transmission channel of the cellular wireless network from the server to said wireless terminal comprising data relative to the remote command,

upon receipt of said second message at the wireless terminal:
- checking received second message for refusing conditions,
- refusing execution of said remote command when a refusing condition is fulfilled,
- otherwise forwarding remote command to said command interface, and
- executing said remote command at the command interface.

## Description

### FIELD OF THE INVENTION

The present invention relates to a method for execution of a remote command in a wireless terminal operating in a cellular wireless network provided by a server. The invention further relates to a wireless terminal operating in a cellular wireless network, and a server communicating with a wireless terminal. The invention further relates to a system of a server and a wireless terminal.

### BACKGROUND OF THE INVENTION

Generally, in the context of machine-type-communication (MTC) wireless terminals are configured to regularly communicate with a central server and provide e.g. control information as well as measurements or other payload created on-site to the central server. Typically a plurality of wireless terminals is spread over a certain region, and is served by a central server, which is directly reachable over the cellular wireless network, the wireless terminals are operating in.

It is of high interest that these wireless terminals, which are often used in critical environments, provide a high level of security, to avoid any hacking attempts like intrusion etc. This could result in misbehaviour, lose of data integration or a complete outage of the wireless terminal, which all of them in any case will at least cost a lot of money and efforts to reinstall.

On the other hand it is necessary that the behaviour of the wireless terminals can be controlled by the central server. Such way of controlling can include a wide variety of parameters like the frequency of measurement, certain cellular wireless network related fine-tuning etc. which are in the ideal world not limited.

It is obvious that to open up a channel for remote configuration of the wireless terminals creates an area of vulnerability for hacking attempts. Such remote configuration is preferably done by submitting remote commands from the server to the wireless terminals, and the wireless terminals execute these commands in a safe way.

It is known in the prior art to send such remote commands by a message, in particular a short message to the wireless terminals. The wireless terminals then extract the remote command from the message and execute it.

This solution as such provides no security measures apart from the fact that the MSISDN of the wireless terminal might not be known for an intruder. Known solutions provide that the short message further comprises any type of code, like a PIN or PUK, that is also present in the wireless terminal. The wireless terminal then has to compare the stored code with the provided code and allows execution only if the two codes match.

The known methods have disadvantages as still the wireless terminals can be spammed with messages until the right code was found. Further the handling of a big amount of messages might lead to an operating overload. Finally man-in-the-middle attacks will not be prevented, moreover secret codes might be revealed. Eventually, with this approach no real secure way of remote configuration of the wireless terminal can be achieved.

There is therefore a need for a solution that allows a variable range of remote configuration of such wireless terminal with high security needs.

### SUMMARY OF THE INVENTION

The present invention aims according to a first aspect at solving the addressed problem by a method for execution of a remote command in a wireless terminal according to claim 1.

The present invention relates according to a second aspect to a wireless terminal configured to be operated within a cellular wireless network according to claim 9 and according to a third aspect a server adapted to communicate with a cellular wireless network according to claim 12. Finally the present invention relates according to a fourth aspect to a system of a wireless terminal and a server according to claim 15.

It is therefore according to the first aspect of the invention proposed a method for execution of a remote command in a wireless,
the wireless terminal and a server communicatively being coupled by a cellular wireless network,
the wireless terminal comprising a command interface configured to execute commands,
the method comprising the steps of
- receiving at the server a first message from the wireless terminal
- in response transmitting a second message on a transmission channel of the cellular wireless network from the server to said wireless terminal comprising data relative to the remote command,
upon receipt of said second message at the wireless terminal:
- checking received second message for refusing conditions,
- refusing execution of said remote command when a refusing condition is fulfilled,
- otherwise forwarding remote command to said command interface, and
- executing said remote command at the command interface.

According to this method a wireless terminal is communicating by means of a cellular wireless network with a server. The cellular wireless network is preferably one according to the known wireless technology standards like 2G (including GSM, GPRS, EDGE), 3G (like UMTS, CDMA, ...) and/or 4G (LTE, LTE advanced, LTE light, WiMax). In particular based on the wireless technologies a wireless TCP/IP connection is used for communication between the wireless terminal and the server.

The wireless terminal can be a handset or a machine configured to communicate in a cellular wireless network. In case of a machine this is typically a so called machine-to-machine (M2M) device. Such M2M devices are in particular car onboard units, metering devices, point-of-sales (POS) devices and/or home security devices.

The wireless terminal further provides a command interface, which is configured to execute commands, be it locally or remotely submitted commands, hereinafter remote commands. Such command interface is typically capable to execute commands which modify the behaviour of the wireless terminal.

In a preferred embodiment the wireless terminal comprises a communication unit and a control appliance, the communication unit is configured to execute communication tasks with remote units by means of the cellular wireless network, and the control appliance is configured to control the execution of the communication unit, wherein the communication unit is configured to be controlled by the control appliance through the command interface.

This is the typical case for the use of machine-to-machine modules, which act as communication unit. The command interface is situated between the communication unit and the control appliance, and is mainly configured to allow the control appliance to control all tasks of the communication unit. In a preferred embodiment the command interface is an AT-interface, which is a standardized text-based serial interface for communication modules. The AT -interface uses a common set of commands - known as the so-called Hayes command set - that can be enhanced by proprietary commands.

The server is typically a centralized work station with access to the cellular wireless network and a backend database. The connection to the cellular wireless network is preferably established by accessing a component of the cellular wireless network, in particular a Gateway GPRS Support Node (GGSN).

Server and wireless terminal are preferably communicatively coupled over TCP/IP based communication. This means that one party addresses the other party by means of an IP address, which allows the other party to respond. The wireless terminals preferably address their messages to an Access Point Name (APN) of the cellular wireless network, which translates a defined content of the message into an IP address and allows via the GGSN to access the server.

When a server handles a group of wireless terminals, which are the assigned wireless terminals, the server is configured to handle messages in parallel, and preferably has in a local database stored representations for each of the wireless terminals.

Usually on the server an application server is running which receives requests e.g. as HTTP, REST, SOAP etc. requests and is able to respond to them accordingly. This application server is further preferably organized in a redundantly and/or in terms of load balancing distributed structure over a couple of instances, usually situated on different physical or virtual servers. The proposed method is now initiated by the wireless terminal, which sends a first message to the server via the cellular wireless network. The address of the server is stored in a permanent storage area within the wireless terminal. Preferably this is already done when putting the wireless terminal in the field. Alternatively it can be configured by means of an exchangeable component, like an UICC resp. SIM card, which provides a high level of security in the first place.

It is important for ensuring the envisaged level of security that it is the wireless terminal which first contacts the server via a preconfigured address. A direct way of providing a remote command to the wireless terminal from another source must not be supported in order to maintain the envisaged level of security. This layout forms the first security guard line of the proposed method.

Upon reception of the first message the addressed server is now able to transmit a second message via a transmission channel of the cellular wireless network to the wireless terminal. This is typically a packet based dedicated downlink transport channel which is provided by the cellular wireless network. Usually the server does not have to care about this, but makes use of an opened up IP connection, and the lower layers of transportation are both transparent to the server and the wireless terminal itself.

First message and second message are preferably combined in a request-response relationship known from TCP/IP based communication architectures. In this architecture the first message forms the request and the second message forms the response.

The second message transmitted by the server comprises data relative to a remote command. A remote command is a command for the command interface, which is launched by a remote unit, which is a unit situated outside of the wireless terminal. It is not necessarily the case that the full command is packaged in the second message; it is also possible that tokens representing a command are submitted.

Further it is possible that not only one command but two or more are transmitted. As in particular the AT-command set allows chaining of commands, it is foreseen as part of the proposed method that this feature is also available for a server when sending a message.

When a command comprises arguments, like a phone number to be called or a mode to be activated, then these parameters are also transmitted with resp. as part of the data relative to the remote command. It is further also possible to omit certain arguments or provide placeholders, in particular those referring to preconfigured default values or those available in the wireless terminal or a component thereof, like an IMEI etc. Optionally those default values can be retrieved from a SIM resp. UICC located within the wireless terminal.

Once the second message from the server comprising the response with the data relative to said remote command has arrived at the wireless terminal, the second security guard line comes into play: In the wireless terminal received message is checked against refusing conditions. This second guard line increases security as it still works even if the server out of any reason gets corrupted. If a hacker gets control over the server as single point of failure, the hacker would have without this second guard line the ability to distribute within a few minutes to all assigned wireless terminals remote commands that could hurt the whole system or even be used to hit other components or the whole cellular wireless network.

Therefore a check for each received message is executed at the wireless terminal which results in a decision, if the received remote command can be executed or not.

If the result shows that the remote command is allowed, it is forwarded to the command interface and executed there. That means that the command interface receives the remote command and processes it in collaboration with the central control processor of the communication unit.

If the decision is not to execute the remote command, the server preferably does not receive a message from the wireless terminal. This is to avoid a warning for a potentially corrupted server which might urge him to try other commands the next time until he is successful.

According to a preferred embodiment it is proposed a method wherein fulfilling the refusing condition being at least one out of the group:
- for the remote command an equivalent is part of a list of blocked commands, available at the wireless terminal, or
- for the remote command no equivalent is part of a list of allowed commands, available at the wireless terminal, or
- the wireless terminal is configured to refuse all remote commands.

This embodiment describes possible ways of checking a refusing condition as mentioned before. It is advantageous if the wireless terminal is configured to execute all or more than one from the refusing condition options, in particular a combination of one list based condition and the refuse all condition.

According to the list based conditions it is proposed to hold a list of commands in the wireless terminal. It is arbitrary if this is held in the control appliance, the communication unit or somewhere else. It is further arbitrary how this list is held in the wireless terminal. Preferably this is stored in a permanent storage, and looked up during the check of the refusing conditions. It is advised to create or modify this list of commands only before or upon bringing the wireless terminal in the field, or when entitled personnel is physically available at the wireless terminal by means of a physical local interface. For a remote modification, additional security measures need to be in place in order not to jeopardize the described security guard lines.

The list does not necessarily have to carry the full commands, but can also comprise tokens for the respective commands. Further it is possible to have a list of commands which are accompanied by a flag or other parameter indicating if the command is allowed resp. blocked or not.

Depending on the configuration of the wireless terminal the stored list can either be a list of blocked commands or allowed commands, also called black list or white list. In both cases for the received remote command an equivalent is part of the respective list. That means that the remote command itself or a corresponding item is part of the list. Such corresponding item can be a substring or a token or one of any other representations that indicate the blocked or allowed commands.

In case the list is a list of blocked commands (black list), then the remote command received with the message from the server is checked if a representation of the command is detected in the list. If the command appears on the list, the refuse condition is met and the command is not entitled to be executed. Otherwise the command is entitled to be executed at the command interface.

If the list is a list of allowed commands (white list), then the remote command received with the message from the server is also checked if a representation of the command is detected in the list. If the command appears in the list, the refuse condition is not met and the command is entitled to be executed at the command interface, otherwise the command is not entitled and not executed.

The advantage of using a blocked command list is that the server does not necessary need to know the full amount of supported commands, and only the ones which are capable to harm the wireless terminal or the cellular wireless network are thus needed to be blocked.

To maintain a list of allowed commands provides the advantage to fully restrict the use of commands except a few allowed ones. For supporting wireless terminals with different command sets, it is safer to use a white list, which could be the same for all wireless terminals.

In essence depending on the strategy to block a large or a small amount of commands it is preferable to select the whitelist (large amount) or blacklist (small amount) option.

In a further preferred embodiment it is proposed a method wherein execution of the remote commands resulting in a change of behaviour of the wireless terminal. With such commands the server is set in the position to configure certain handling of the wireless terminal, in particular the communication unit. Such remote commands can in particular influence the way the wireless terminal is interacting with the cellular wireless network, how it accesses the SIM card, and/or simply provide status information by way of response to the remote commands.

According to a further advantageous embodiment it is proposed that the change of behaviour being a change of the refusing conditions of received remote commands and said change of the refusing conditions comprising a switch between the options of refusing all remote commands and another option, and a switch back to the first option being conducted upon a time based event.

With that embodiment the server has the capabilities to assign new commands to the list of commands, modify or delete commands. Further a switch between refusing conditions, like for maintenance changing from the status of refusing all commands to handling a list of commands can be initiated by such a remote command according to this embodiment.

It is recommended to accompany a change of the refusing conditions by way of a separate information to the server or at least another supervising server, be it on the same channel or by an alternative channel, e.g. via SMS. To maintain the security this message must not be deactivated, at least not when the list of commands is changed in any way.

With this embodiment it is possible to reconfigure the behaviour of a multitude of wireless terminals assigned to the server without the requirement of any manual interaction at the wireless terminal. By sending out such reconfiguration commands as soon as the wireless terminals assigned to the server contact the server it can be assured that the same configuration is available at each of the assigned wireless terminals within a defined time. Preferably this reconfiguration comprises according to this the option to configure refusing all remote commands as the default option, and only under certain circumstances, in particular as part of a regular maintenance window, the other options - which allow at least some commands to be executed - are activated. According to this embodiment it is not required to send another command for switching back to the default option, but a time based event leads to a switch back at the side of the wireless terminal. It is arbitrary if the time based event is based on a time duration provided by the server, in particular with the message comprising the remote command resulting in a change of refusing conditions, or if the time duration is preconfigured within the wireless terminal. It is at least advantageous that the time duration is at least as long as the period between two of the regular first messages of the wireless terminal to the server for receiving messages. This assures that at least one message with a remote command can be received.

It is further advantageous to enhance the time duration at the wireless terminal with each successfully executed remote command in order to allow execution of consecutive remote commands from the server within the maintenance window.

In a preferred embodiment it is suggested a method wherein the equivalent of a remote command being part of at least one of the list of commands available at the wireless terminal is a substring of a remote command, and wherein fulfilling of a refusing condition being that the substring is contained in the remote command.

According to this embodiment the equivalent of a remote command can provide a representation of a plurality of commands that are stored in the list. According to this it is sufficient during the check of refusing conditions for a submitted remote command, that the submitted remote command is one of a plurality of commands represented by the equivalent of a remote command in the list. It is advantageous to fulfil this by using wildcards. As such it is sufficient that the equivalent stored in the list - without the wildcard - forms a substring of the remote command to get a match between the received remote command and the equivalent of a remote command stored in the list. It is arbitrary if this applies to the list of allowed or to the list of blocked commands.

This option allows covering a plurality of commands in the list that are to be allowed or disallowed. In particular commands with a common substring that are designated for similar tasks can as such being allowed or disallowed with one item in the respective list.

According to another preferred embodiment it is proposed a method wherein the first message from the wireless terminal comprising at least one identification item, said identification item being unique for the wireless terminal and/or a part thereof, and prior to the step of transmitting the first message querying at the server if for the wireless terminal identified by said identification item a message comprising data relative to the remote command is ready for transmission.

By doing so the server is put in the position to provide remote commands to single identified wireless terminals of the group of wireless terminals assigned to the server. When now the wireless terminal provides its identification item, the server is able to look up pending remote commands for the respective wireless terminal.

It is arbitrary how the server is operating such a first message equipped with an identification item. Preferably it provides a backend database, comprising at least one table with pending remote commands for one or more out of the group of assigned wireless terminals. Such table preferably comprises at least one secondary key field, which holds the identifying item. With a simple query with the identification item provided with the first message it can be figured out if pending remote commands for this wireless terminal are available in the table of the database.

When no remote command is available, in response to the first message of the wireless terminal preferably an empty information message is sent, if any. If one remote command is found as a result of the query, this remote command is - potentially after some transformation steps, e.g. in order to use tokens instead of the full command - submitted as second message to the wireless terminal as part of the response to the wireless terminal's requesting first message.

If more than one remote command is found as a result of the query, there are two options. One is to put more than one command in the second message to the wireless terminal, preferably by means of concatenating commands. The other option is to provide two consecutive messages. Generally this requires another first message from the wireless terminal in a request-response scenario. Therefore it is advantageous to store the pending commands with a timestamp in the database and sort the result set of the query by timestamp, so that the first result in the list provides the one that is entered into the database before the other. Additionally a high priority field can be used in the table and the query, which overruns the first-in-first-out principle by priorities.

After a pending remote command was picked for submission to the wireless terminal, it is deleted from the database table.

For the identification item it is advantageous to use a wide variety of identifier, which are preferably unique, at least within the group of assigned wireless terminals. Without further efforts from the server administration site this is assured if keys are used, which are per se worldwide unique, like the IMEI, the IMSI, or the MSISDN.

With this approach it is at server side possible both to address commands to single wireless terminals, to a larger group of wireless terminals, e.g. those situated in a certain cell, or all assigned wireless terminals. As soon as all of the envisaged wireless terminals have been requested for pending remote commands, the table should be empty. This is also a good indication to figure out if all wireless terminals are up and running, as for those which are not able to contact the server, the pending remote commands remain in the database table. With the stored timestamp it can with cleanup checks be figured out at the server if pending remote commands remained in the backend database for a certain time, e.g. a few hours.

In another advantageous embodiment it is proposed a method wherein after the step of executing said remote command sending of a third message comprising a confirmation from the wireless terminal to said server.

According to that only in case of a successful execution - that is, the provided remote command passed the check of refusing conditions - the result of the executed command is sent back to the server as part of another third message confirming the successful execution. Such third message preferably comprises results of the executed command either as a boolean success or fail indicator, or as a return value. The latter is in particular true for mere monitoring commands that as part of a second message from the server request e.g. the currently received signal power.

The returned third message from the wireless terminal to the server can preferably be accepted at the server as a new first message requesting a potential further remote command. This is in particular true for the mentioned case that more than one remote command is available at the server side for this wireless terminal as identified by its identifying item. By doing so it is assured a well synchronized handling of many consecutive remote commands for a single wireless terminal, as each additional remote command is only sent from the server to the wireless terminal, once the wireless terminal finished the execution of the previous command. This is in particular of interest for commands with a long execution time, in particular for wireless terminals that are only able to execute one command at a time. Additionally it is further advantageous to link on server side at least two remote commands designated for a certain wireless terminal that way, that out of a pair of two successive remote commands the second remote commands is only provided to the wireless terminal, under a certain condition. This condition is that the status of the first remote command indicates a successful execution, or alternatively a value provided as results of the first remote command meets a predefined threshold value. The server detects this status or value from the third message received from the wireless terminal. Like that special scenarios can be created e.g. sending a command to execute a cell reselection, if the received signal power at the current cell is below a given threshold.

According to a further embodiment it is proposed a method comprising:
- before the step of receiving a first message from the wireless terminal, sending from the server a message through a channel different from the transmission channel to the wireless terminal,
- said message comprising identification item identifying the server,
- at the wireless terminal checking if identification item matches identification of the server stored in wireless terminal,
- sending a first message to the server, in case received identification item matches stored identification of the server.

According to this embodiment the server has the ability to urge the wireless terminal to send a first message requesting a remote command to the server. This is done by means of a channel different from the transmission channel to the wireless terminal, that means other messaging options within the cellular wireless network. As preferred option it is envisaged to send a SMS from the server to the wireless terminal. Such message provides an identification item which allows the wireless terminal to detect that the message was send from the server. In case of an SMS this could e.g. be done by means of the originator MSISDN, which the wireless terminal needs to store in its storage area for lookup purposes.

At the wireless terminal the received identification item is then matched with the server identification stored within the storage area of the wireless terminal. If the sent identification item and the stored identification item match, the wireless terminal sends a first message to the server outside the normal schedule. The server is addressed as described above, that is the previously configured server address is used regardless of what information are available within the received message.

Advantage of this option is to allow the server in case of emergency or other urgent reasons a quicker access to the wireless terminal. This embodiment provides such urgency request without loss of security, as nothing else changes than the timing of the wireless terminal sending a request to the server. Even if a third server of a hacker would send a message, e.g. an SMS and achieves somehow to fake the originator MSISDIN as the one from the original server, the wireless terminal would only send to the correct server - instead of the hacking server - a message requesting for retrieving a remote command.

In order to avoid distributed denial of service attacks on the server, by plenty of wireless terminals repeatedly sending requests to the server, further security measures, like a security time lag between two messages, in particular an increasing security time lag, or alternatively/additionally a full rejection above a certain amount of messages in a certain time period, are proposed.

According to a second aspect of the invention it is proposed a wireless terminal configured to be operated within a cellular wireless network,
the wireless terminal comprises a command interface configured to execute commands,
wherein the wireless terminal is adapted to execute the steps of:
- send a first message to a remote server by means of a transmission channel of the cellular wireless network,
- receive from the server a second message comprising data relative to a remote command,
- check received second message for refusing conditions,
- refuse execution of said remote command when a refusing condition is fulfilled,
- otherwise forward remote command to said command interface, and
- execute said remote command at the command interface.

Such wireless terminal according to the second aspect shares the advantages achieved with the operating method of the first aspect of the invention.

According to a further advantageous embodiment it is proposed a wireless terminal which comprises a communication unit and a control appliance, the communication unit is configured to execute communication tasks with remote units by means of the cellular wireless network, and the control appliance is configured to control the execution of the communication unit, wherein the communication unit is configured to be controlled by the control appliance through the command interface.

In this embodiment the wireless terminal shares its tasks between the control appliance and the communication unit. Preferably the control appliance carries out the steps of the wireless terminal, in particular conducts the checks for refusing conditions, and if no refusing matches, forwards the remote command to the command interface. When the command interface executes the remote command this means in particular, that it receives the remote command, parses it, and if it has an accurately syntax processes it in conjunction with other components of the communication unit. As such, a remote command affecting the communication with the cellular wireless network requires the involvement of a protocol stack, baseband chips and transceiver of the communication unit.

It is further advantageous that the wireless terminal is configured to send messages to the server in a regular schedule. Such regular schedule is preferably one which is executed like a regular polling, that is one message is sent to the server after a pre-configurable time span. Such pre-configuration can be done based on a configuration executed before bringing the wireless terminal in the field, or by a remote command provided by the server by means of above mentioned first aspect of the current invention.

With a regular polling it is achieved the situation that after passing the preconfigured time span it can be guaranteed for a proper working wireless terminal that a remote command which was prepared in the backend database of the server is executed at the wireless terminal. Vice versa it can be determined, if the wireless terminal did not poll for a remote command, that the wireless terminal is not working properly.

According to a third aspect of the invention it is proposed a server adapted to communicate with a cellular wireless network,
said server is configured to execute the steps of:
- receive from a wireless terminal a first message by means of the cellular wireless network,
- transmit a second message by means of a transmission channel of the cellular wireless network to the wireless terminal, comprising data relative to a remote command,
- receive a third message from wireless terminal, in case at wireless terminal remote command was executed.

Such server according to the third aspect shares the advantages achieved with the operating method of the first aspect of the invention.

According to a further advantageous embodiment it is suggested a server who comprises a storage area capable of storing at least one second message ready for transmission to a wireless terminal, the second message comprises a terminal identification item, and upon reception of the first message from the wireless terminal execute the steps:
- read out identification item from the received first message,
- compare identification item with terminal identification item in the second message,
- transmit the second message only if the identification item and the terminal identification item match.

According to this embodiment the server is configured to analyze the first message received by the wireless terminal by reading out an identification item from the received first message. Only if the identification item included in the first message from the wireless terminal denotes a wireless terminal known to the server - in particular, it belongs to the group of assigned wireless terminals - the server is configured to handle the first message. This assures that only known and entitled wireless terminals may submit request messages and can expect a second message in response. Hence the server looks up, if the identification unit the wireless terminal provided with the first message is available at the server side. If the identification item matches, the respective second message is sent, otherwise the server preferably does not react at all.

In another advantageous embodiment the server is configured to execute, before the step of receiving a first message, the steps:
- send a message to the wireless terminal through a channel different from said transmission channel,
- said message comprising identification item identifying server,
- receive the first message from the wireless terminal only if said identification item is successfully checked in wireless terminal.

As set out above this allows the server sending a message, preferably an SMS, to the wireless terminal. The message comprises an identification item of the server, preferably a MSISDN or another identifier, that is known to the wireless terminal.

The server can only expect that in response to the message the wireless terminal sends a first message requesting a remote command, if the identification item is the one configured within the wireless terminal. That also means that to send such a message to a wireless terminal which does not belong to the group of assigned wireless terminals, would not result in a first message from the wireless terminal to the respective server.

According to a fourth aspect of the invention it is suggested a system for exchanging messages comprising a wireless terminal according to claim 9 to 11 and a server according to claim 12 to 14,
the wireless terminal and the server are configured to exchange messages by executing the steps of:
- receive at the server a first message from the wireless terminal,
- in response transmit a second message on a transmission channel of the cellular wireless network from the server to said wireless terminal comprising data relative to the remote command,
upon receipt of said second message at the wireless terminal:
- check received message for refusing conditions,
- refuse execution of said remote command when a refusing condition is fulfilled,
- otherwise forward remote command to said command interface of the wireless terminal, and
- execute said remote command at the command interface.

The system shares the advantages achieved by the previous aspects of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1: represents a block diagram showing the involved components.
- Figure 2: shows a sequence diagram showing the call process for requesting a remote command
- Figure 3: shows a sequence diagram showing the check of refusing conditions after receiving a remote command message.

### DETAILED DESCRIPTION OF EMBODIMENTS OF THE INVENTION

Within this description the same elements have been designated with the same reference numerals in the different drawings. For clarity, only those elements and steps which are useful to the understanding of the present invention have been shown in the drawings and will be described. Moreover, when an action is said to be performed by a unit, it is in fact executed by a microprocessor in this unit controlled by instruction codes recorded in a program memory on the said unit.

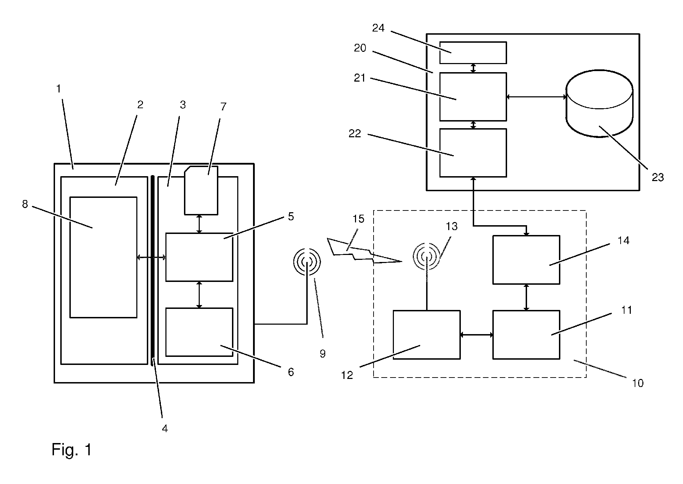

FIG. 1 schematically shows a block diagram of the involved devices and its components according to a preferred embodiment of present invention. The wireless terminal 1 comprises in this embodiment a control appliance 2 and a communication unit 3. The control appliance 2 is in this embodiment the active controlling entity of the whole wireless terminal 1, and typically provides a user interface (not shown) to give a human user the ability to interact with the wireless terminal 1 and hence with a cellular wireless network 10.

Such wireless terminal 1 can e.g. be a home security device, where in case of an emergency the user can launch an emergency call to a preprogrammed number. The control appliance 2 would accept this command through the user interface, and by means of its control processor 8 launch a call through the communication unit 3 by sending a command to the command interface 4. Such command interface 4 is preferably an AT-interface, in particular when the communication unit 3 is implemented as Machine-to-Machine (M2M) module, as shown in this embodiment.

The communication unit 3 further comprises a central processing unit 5 which controls all communication both with the cellular wireless network 10 and the control appliance 2 through the command interface 4. The central processing unit 5 comprises also the baseband components which perform all communication steps with the air interface 15 of the cellular wireless network 10, in other embodiments this part can also form separated components, like a application processor, a baseband and transceiver etc. In any case, this part has to have access to the antenna 9 of the wireless terminal 1.

Further the communication unit 3 comprises a storage area 6 for storing at least configuration data sets, like the access address for the server 20 or lists of commands that are to be checked according to a preferred embodiment as part of the refusing condition check.

Additionally the control unit 3 resp. the central process unit 5 has access to a identification unit 7, which is typically implemented as removable Subscriber Identification Module (SIM)-card or Universal Integrated Circuit Card (UICC), but can also provide a so-called Machine-Identification-Module (MIM), which is soldered on the board of the communication unit 3 or the wireless terminal 1. As such identification unit 7 provides a certain amount of storage, it is further possible that at least a part of the information stored in the storage area 6 are stored in the identification unit 7. This has the advantage, that the identification unit 7 can be preconfigured e.g. for use in connection with a certain server 20 and a preconfigured set of allowed or disallowed commands, and thus the wireless terminal 1 gets fully configured just by putting this identification unit 7 in the respective slot of the wireless terminal 1.

As set out before, the wireless terminal 1 has - by means of the communication unit 3 and finally by its antenna 9 - access to a cellular wireless network 10 through the air interface. The direct interface of the cellular wireless network 10 to a wireless terminal 1 is through one of its base nodes 12, which comprises an antenna 13. Depending upon the type of wireless technology standard the base node 12 can be a base station, a nodeB or eNodeB. Each cell is equipped with such a base node and as such the coverage area of the cellular wireless network 10 is fully supplied. Further it is depending upon the wireless technology standard which components are present behind the base node 12.

At least each cellular wireless network 10 comprises the core network (CN) 11, which controls the behaviour of the full cellular wireless network 10. In particular it provides access to outside servers 20, in the current embodiment through the Gateway GPRS Support Node (GGSN) 14. For the use case of a packet based, in particular IP based, communication the CN 11 and/or the GGSN 14 provide an access point name APN as a reference to the GGSN 14. The APN allows wireless terminals 1 to access via IP the internet. So each packet from the wireless terminal 1 is sent to the APN and is addressed to a certain IP address. The IP address denotes the server 20 which is connected to the GGSN 14 which is referenced by the APN.

The server 20 comprises in present embodiment an application server 22, a control unit 21 and a backend database 23. The application server 22 is the interface which accepts incoming IP based requests. This can be a HTTP-server, like Apache Tomcat, or other kinds of server architectures, e.g. SOAP, REST etc. It is further possible, but in terms of scalability not recommended, to integrate the control unit 21 and the application server 22 in one server component. To increase the reliability of the server 20 one or more of the shown commands of the server 20 can also be implemented redundantly, and further load-balancing measures are preferably implemented. This means, that the shown components do not necessarily match single computing devices, but can also be spread over a plurality of computing devices, even in different sites.

The control unit 21 receives incoming request messages, which are formally acceptable and not blocked through optional firewalls or other security measures at the application server 22, and handles them according to implemented business logic. In the present embodiment a request from a wireless terminal 1, in particular a polling request, comprises identification items identifying the wireless terminal 1. This allows the control unit to access with the provided identification item the backend database 23 in order to detect, if any pending remote commands for the requesting wireless terminal 1 are stored. The backend database 23 has at least a table storing all wireless terminals 1 known to the server 20. This can be in the example of a home security device all customers who subscribed to a certain emergency service, and as such additional data, like address, phone number etc. are stored with the wireless terminal's identifying item.

Said remote commands can be created as part of a controlling console 24, which is a user interface for a human administrator. This controlling console 24 can be run on normal personal computers or specialized terminals. The controlling console 24 allows an administrator to formulate remote commands for one or a plurality of wireless terminals 1. The control unit 21 of the server 20 is as such able to provide a response through the application server 22 to the cellular wireless network 10, which takes care to route back the response to the requesting wireless terminal 1.

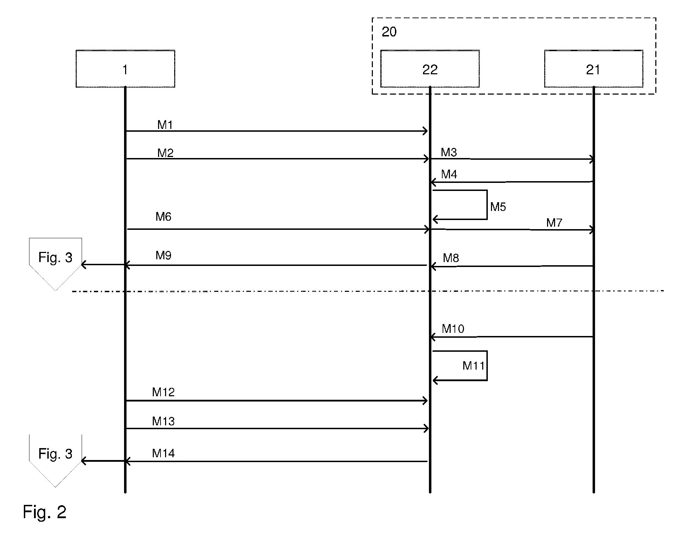

Figure 2 shows a sequence diagram of the general process of exchanging messages between the wireless terminal 1 and the server 20, resp. its components, which is the initial part of each communication between both parties. At this diagram it is abstracted from the bearing cellular wireless network 10. Further a different sharing of tasks inside the server 20 is also possible, and as such covered by the description.

In the sequence the main scenarios are displayed, which can happen with respect to the communication between a wireless terminal 1 and a server 20 in a request-response architecture.

The first scenario is, that the wireless terminal 1 requests for a message from the server 20, but in the first place no message is available. Generally the process starts with opening up a TCP connection in step M1. Depending on the network type a TCP context can be closed after each request or opened for a longer time. With respect to sending remote commands it is preferable to close the TCP connection, as some submitted commands may rely on a wireless terminal 1 operating in idle mode. In case of an open TCP context for a longer time there could be a couple of intermediate steps between step M1 and M2. In step M2 a message is sent from the wireless terminal 1 to the application server 22 of the server side. From server 20 perspective this is an inbound message. This message includes the information identifying the wireless terminal 1 and the kind of message, in particular denoting a request for remote commands.

In response the application server 22 forwards the inbound message M2 to the server's control unit 21 in step M3 and checks if a remote command is available for requesting wireless terminal 1. This is done at the control unit 21 by querying the backend database 23 for stored commands dedicated to the requesting wireless terminal 1, as described above for FIG. 1. In this example no remote command is found in the backend database 23, so in M4 the control unit 21 informs the application server 22 about this fact. The application server 22 therefore processes this information in M5 and detects that no response is sent to the wireless terminal 1. Alternatively it would also be possible, to send a response telling that no message is available, but in case the assigned wireless terminals 1 frequently poll for new remote commands this would lead to a rather high signalling load. The wireless terminal 1 typically is configured to maintain a timer and if the timer is expired, without a response from the server 20, then the wireless terminal 1 knows that no remote command is waiting to be submitted.

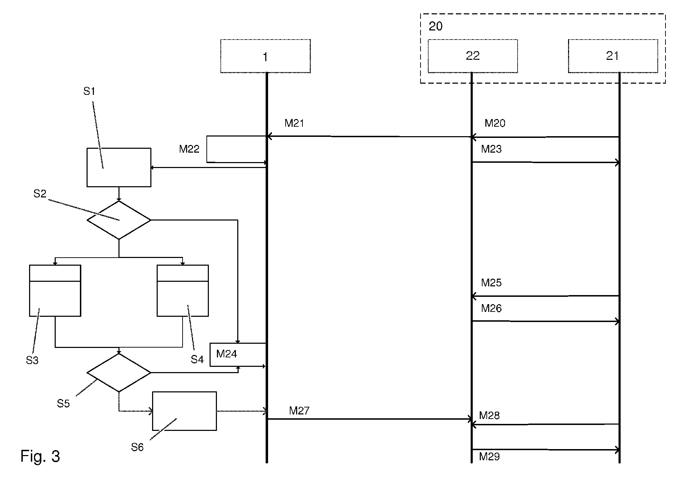

According to the proposed regular polling mechanism after a defined while the wireless terminal 1 again sends a request to the server 20 in step M6. In step M7 again the application server 22 checks at the control unit 21 for remote commands waiting for this wireless terminal 1. But now such a remote command is available and is provided from the control unit 21 as outbound message M8 to the application server 22, which sends it as response outbound message M9 to the wireless terminal 1. The handling of the outbound message is described for FIG. 3.

In optional cases it is also possible that more than one outbound message is available for the wireless terminal 1 following the request M6 from the wireless terminal 1. This situation is shown in below the dot and dash line as second scenario. In this case the control unit 21 sends at least one further outbound message M10 to the application server 22. This message can certainly already be sent together with M8, but in the described embodiment only one of the received messages are sent within M9 to the wireless terminal 1.

So the application server 22 queues messages in M11 from the control unit 21 for one wireless terminal 1, until the wireless terminal 1 sends another request in step M13. This is now happening after opening up again the TCP connection in M12, then another inbound message M13 - alike M2 and M6 - is sent by the wireless terminal 1 to the application server 22.

Now the application server 22 detects the non-empty queue of messages for the wireless terminal 1, and can without further interaction with the control unit 21 send in M14 the next response carrying the next message out of the queue. If more messages are stored in the queue, then this procedure is repeated with the next request from the wireless terminal 1, otherwise the normal polling scheme according to the first scenario starts anew at M1.

FIG. 3 shows the procedures of interaction between the server 20 and the wireless terminal 1 when a remote command was submitted following a request according to the process shown in FIG. 2. It starts with the message M20 coming from the control unit 21 following a request from the wireless terminal 1 like shown in FIG. 2. Message M20 triggers sending a response comprising a remote command, in particular an AT-command, from the application server 20 to the wireless terminal 1 with message M21. Message M21 corresponds to the messages M9 and M14 in FIG. 2.

Such remote command can for instance be an AT-command for requesting information from the wireless terminal 1, like which technology or band is in use, temperature or other measures, further AT-commands instructing the wireless terminal 1 to carry out certain tasks like scanning of neighbouring cells or radio access networks, detach and attach to another network operator etc.

On the site of the server 20 according to this embodiment a transaction ID is sent back in M23 from the application server 22 to the control unit 21. As it can be seen later, this is useful for tracking and matching the response received from the wireless terminal 1 like a session identifier.

On the side of the wireless terminal 1 it is checked in M22 the incoming message M21, if it contains information relative to a remote command. If this is not the case, no further action is happening, including not sending a response to the server 20.

When now a remote command is identified in message M21 it is handled in the steps S1-S6, in particular with regards to refusing conditions. So first in step S1 the remote command, in particular the AT-command is unpacked from the incoming message and some sanity checks - like syntactical completeness etc. - can be done in advance. Further in case placeholders need to be filled for completing the AT-command, like the wireless terminals MSISDN etc., this is done within this step.

Then it is checked in S2, if the wireless terminal 1 is configured to refuse all commands or not. Only if this is not the case the next steps are executed, otherwise it jumps directly to M24 for finalizing the remote command handling. It is also possible to conduct this step before step S1.

If the wireless terminal 1 is generally allowed to execute remote commands, one of the next steps S3 or S4 is handled, depending on the configuration of the wireless terminal 1. S3 defines the search of the command in a list of blocked commands; S4 defines the search of the command in a list of allowed commands.

The result of this check indicates in case of S3 the command as executable if it is not found in the respective list. In case of S4 the command is indicated as executable if it is found in the other list. In S5 it is then checked the result of previous checks, that is, if the command is executable or not. If not, it jumps to step M24, where it is decided not to respond to the message from the server 20, and simply discard the remote command.

Otherwise the remote command is in step S6 sent to the command interface of the communication unit, executed there and the result of the execution is returned. This result is then sent in message M27 back to the application server 22. The application server 22 either enriches the message with the transaction ID, or it is already provided in message M27, in this case the wireless terminal 1 cares for the transaction ID and returns it with the message M27. In the example of the remote command requesting information like the temperature here the measured temperature value is returned. For instructing remote commands the result of the operation (failed/successful) is typically returned.

The control unit 21 is regularly polling the application server 22 for results for a certain transaction ID, like done in M25 and M28. The application server 22 responds in M26 that nothing has returned, and in M29 the result of the execution of the remote command in the wireless terminal 1. It is advantageous to maintain a timer at the server 20 for each remote command, if a response is returned. If no response returns within the given time, it is most likely that the wireless terminal 1 is not configured to execute remote commands, at least not the one provided by the server 20. In such a case the server 20 could be configured to initiate a maintenance window by another command which is submitted once another request from the wireless terminal 1 arrives. If this maintenance window is confirmed by the wireless terminal 1, the server 20 can send anew the remote command to be executed at the wireless terminal 1.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for execution of a remote command in a wireless terminal (1),
the wireless terminal (1) and a server (20) communicatively being coupled by a cellular wireless network (10),
the wireless terminal (1) comprising a command interface (4) configured to execute commands,
the method comprising the steps of:
- receiving at the server (20) a first message from the wireless terminal (1),
- in response transmitting a second message on a transmission channel of the cellular wireless network (10) from the server (20) to said wireless terminal (1) comprising data relative to the remote command,
upon receipt of said second message at the wireless terminal (1):
- checking received second message for refusing conditions,
- refusing execution of said remote command when a refusing condition is fulfilled,
- otherwise forwarding remote command to said command interface (4), and
- executing said remote command at the command interface (4).

2. Method according to claim 1,
wherein fulfilling the refusing condition being at least one out of the group:
- for the remote command an equivalent is part of a list of blocked commands, available at the wireless terminal (1), or
- for the remote command no equivalent is part of a list of allowed commands, available at the wireless terminal (1), or
- the wireless terminal (1) is configured to refuse all remote commands.

3. Method according to one of the previous claims,
wherein execution of the remote commands resulting in a change of behaviour of the wireless terminal (1).

4. Method according to claim 3,
wherein the change of behaviour being a change of the refusing conditions of received remote commands and said change of the refusing conditions comprising a switch between the options of refusing all remote commands and another option, and a switch back to the first option being conducted upon a time based event.

5. Method according to at least one of the claims 3 to 4,
wherein the equivalent of a remote command being part of at least one of the list of commands available at the wireless terminal (1) is a substring of a remote command,
and wherein fulfilling of a refusing condition being that the substring is contained in the remote command.

6. Method according to at least one of the previous claims,
wherein the first message from the wireless terminal (1) comprising at least one identification item, said identification item being unique for the wireless terminal (1) and/or a part thereof,
and prior to the step of transmitting the first message querying at the server (20) if for the wireless terminal (1) identified by said identification item a second message comprising data relative to the remote command is ready for transmission.

7. Method according to at least one of the previous claims,
wherein after the step of executing said remote command, sending of a third message comprising a confirmation from the wireless terminal (1) to said server (20).

8. Method according to at least one of the previous claims,
comprising:
- before the step of receiving a first message from the wireless terminal (1), sending from the server (20) a message through a channel different from the transmission channel to the wireless terminal (1),
- said message comprising identification item identifying the server (20),
- at the wireless terminal (1) checking if identification item matches identification of the server (20) stored in wireless terminal (1),
- sending a request to the server (20), in case received identification item matches stored identification of the server (20).

9. Wireless terminal (1) configured to be operated within a cellular wireless network (10),
the wireless terminal (1) comprises a command interface (4) configured to execute commands,
wherein the wireless terminal (1) is adapted to execute the steps of:
- send a first message to a remote server (20) by means of a transmission channel of the cellular wireless network (10),
- receive from the server (20) a second message comprising data relative to a remote command,
- check received second message for refusing conditions,
- refuse execution of said remote command when a refusing condition is fulfilled
- otherwise forward remote command to said command interface (4), and
- execute said remote command at the command interface (4).

10. Wireless terminal (1) according to claim 9,
the wireless terminal (1) further comprising a storage area (6),
wherein the refusing condition is at least one out of the group:
- the remote command is listed on a list of blocked commands stored in the storage area (6), or
- the remote command is not listed on a list of allowed commands, stored in the storage area (6), or
- the wireless terminal (1) is configured to refuse all remote commands.

11. Wireless terminal (1) according to at least one of claims 9 or 10,
wherein the wireless terminal (1) comprises a communication unit (3) and a control appliance (2),
the communication unit (3) is configured to execute communication tasks with remote units by means of the cellular wireless network (10),
and the control appliance (2) is configured to control the execution of the communication unit (3),
wherein the communication unit (3) is configured to be controlled by the control appliance (2) through the command interface (4).

12. Server (20) adapted to communicate with a cellular wireless network (10), said server (20) is configured to execute the steps of:
- receive from a wireless terminal (1) a first message by means of the cellular wireless network (10),
- transmit a second message by means of a transmission channel of the cellular wireless network (10) to the wireless terminal (1), comprising data relative to a remote command,
- receive a third message from wireless terminal (1), in case at wireless terminal (1) the remote command was executed.

13. Server (20) according to claim 12,
wherein the server (20) comprises a storage area (23) capable of storing at least one second message ready for transmission to a wireless terminal (1), the second message comprises a terminal identification item, and
upon reception of the first message from the wireless terminal (1) execute the steps:
- read out identification item from the received first message,
- compare identification item with terminal identification item in the second message,
- transmit the second message only if the identification item and the terminal identification item match.

14. Server (20) according to at least one of claims 12 or 13,
wherein the server (20) is configured to execute, before the step of receiving a first message, the steps:
- send a message to the wireless terminal (20) through a channel different from said transmission channel,
- said message comprising identification item identifying server (20),
- receive the first message from the wireless terminal (20) only if said identification item is successfully checked in wireless terminal (1).

15. System for exchanging messages comprising
a wireless terminal (1) according to claim 9 to 11 and a server (20) according to claim 12 to 14,
the wireless terminal (1) and the server (20) are configured to exchange messages by executing the steps of:
- receive at the server (20) a first message from the wireless terminal (1),
- in response transmit a second message on a transmission channel of the cellular wireless network (10) from the server (20) to said wireless terminal (1) comprising data relative to the remote command,
upon receipt of said second message at the wireless terminal (1):
- check received message for refusing conditions,
- refuse execution of said remote command when a refusing condition is fulfilled,
- otherwise forward remote command to said command interface (4) of the wireless terminal (1), and
- execute said remote command at the command interface (4).
